(19) Europäisches Patentamt
European Patent Office
Office européen des brevets

(11) EP 4 275 492 A1

(12) EUROPEAN PATENT APPLICATION

(43) Date of publication:
**15.11.2023 Bulletin 2023/46**

(21) Application number: **23159275.9**

(22) Date of filing: **08.10.2020**

(51) International Patent Classification (IPC):
***A01N 25/02*** *(2006.01)* ***A01N 25/30*** *(2006.01)*
***A01N 33/12*** *(2006.01)* ***A01N 43/36*** *(2006.01)*

(52) Cooperative Patent Classification (CPC):
(C-Sets available)
**A01N 43/36; A01N 25/02; A01N 25/30; A01N 33/12**

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2019 EP 19202556**

(62) Document number(s) of the earlier application(s) in accordance with Art. 76 EPC:
**20789578.0 / 4 040 960**

(71) Applicant: **Bayer Aktiengesellschaft**
**51373 Leverkusen (DE)**

(72) Inventors:
- **PERIS URQUIJO, Gorka**
**50737 Köln (DE)**
- **HAAS, Pierre Philippe**
**51375 Leverkusen (DE)**

(74) Representative: **BIP Patents**
**c/o Bayer Intellectual Property GmbH**
**Alfred-Nobel-Straße 50**
**40789 Monheim am Rhein (DE)**

Remarks:
This application was filed on 28-02-2023 as a divisional application to the application mentioned under INID code 62.

# (54) FORMULATION OF INSECTICIDES COMPRISING PROPYLENE CARBONATE

(57) The invention relates to insecticidal active ingredient formulations comprising at least one active ingredient or a combination of active ingredients in solid form having good storage stability at high and low temperatures and high active ingredient penetration, to a process for production thereof and to the use thereof for application of the active ingredients present.

EP 4 275 492 A1

(52) Cooperative Patent Classification (CPC): (Cont.)

C-Sets
**A01N 25/30, A01N 25/02, A01N 43/36;**
**A01N 43/36, A01N 25/02, A01N 25/30**

## Description

The invention relates to insecticidal active ingredient formulations comprising an active ingredient or a combination of active ingredients in solid form having good storage stability at high and low temperatures and high active ingredient penetration, to a process for production thereof and to the use thereof for application of the active ingredients present. The present invention further relates to adjuvant combinations for insecticidal active ingredient formulations having an active ingredient or a combination of active ingredients in solid form for improving the penetration of an active ingredient or a combination of active ingredients .

To display biological efficacy, systemic active agrochemical ingredients, especially systemic insecticides, need a formulation which enables uptake of the active ingredients into the plants/the target organisms. The best effect can be achieved in that the corresponding active ingredients are either diluted in aqueous solution for use and/or are already preferably in the dissolved state in the concentrate, such that a high active ingredient concentration is available at any time.

This is the case whenever active ingredients or active ingredient combinations are formulated as an emulsion concentrate (EC) or soluble liquid (SL), whereas the availability of dissolved and suspended active ingredients is limited via the dissolution equilibrium.

Furthermore, biological activity can optionally be increased further by adding suitable adjuvants/penetrants.

As mentioned above, in formulations such as suspension concentrates (SC) and/or oil-based suspension concentrates (OD), the active ingredients or active ingredient combinations are not in dissolved form but in solid, particulate form, and so these active ingredients in the formulations typically do not have good bioavailability. It is possible here to increase biological activity essentially only by addition of suitable adjuvants/penetrants, but this, by comparison with the above-described EC or SL formulations, nevertheless leads to reduced biological activity.

It is known that active agrochemical ingredients differ from one another in aspects including their physicochemical properties, for example solubility in water, solvents and/or oils, melting and boiling point, polarity, molar mass, etc. These properties affect the formulability of the active ingredients. Many known active agrochemical ingredients, for example, have a high melting point and can therefore withstand thermal stresses as occur, for example, in the production of suspension concentrates. By contrast, active ingredients having a low melting point are able to withstand these production conditions only with difficulty and can be produced as storage-stable suspensions only to a very limited degree since softening or melting of the active ingredient is to be expected at higher temperatures. However, if the active ingredient is no longer in crystalline form, the physical and sometimes chemical stability of the product formulated is often lowered significantly and it no longer has any practical utility.

It is additionally known that organic substances have different water solubilities, and these water solubilities, according to chemical characteristics, may be pH-dependent, for example through salt formation.

It is a feature of stable suspension concentrates that they are both physically and chemically storage-stable over a prolonged period (12-24 months) and over a wide temperature range (0 to 54°C). This broad temperature range is required in order that, advantageously, just a single formulation with the same active ingredients or active ingredient combinations can be used in different climatic regions.

The storage stability of suspension concentrates is characterized in that, inter alia, containers of these suspension concentrates have only low phase separation, if any, over the period of storage. A further parameter for the stability of suspension concentrates is, for example, the stability of the dispersion in the concentrate, which is manifested in the presence or absence of agglomerates in the concentrate.

The prior art also discloses propylene carbonate as solvent for active agrochemical ingredients. For example, WO 2006/089661 (US 2008/0255204 A1, Davies et al.) describes propylene carbonate-containing agrochemical formulations in which the active agrochemical ingredients are in dissolved form. No conclusions at all can be drawn therefrom as to the physical stability of complex suspension concentrates as described in the present invention. Paragraph [0015] describes the use of propylene carbonate, inter alia, as penetration aid for crop protection compositions, which is also described in [0041]-[0050]. However, the penetration-imparting effect is discussed by way of example only with one active ingredient (imidacloprid); furthermore, the penetration-imparting effect of propylene carbonate shown in WO 2006/089661 should be regarded as comparatively minor in formulations by comparison with the formulations without propylene carbonate. Owing to the structural diversions of crop protection compositions and the resulting different physicochemical properties, it is not possible even for the expert to conclude directly that this penetration-imparting effect will also be applicable to other active ingredients.

WO 2011/029552 describes alkyl polypropylene glycol-polyethylene glycol (e.g. Antarox B/848)-containing agrochemical formulations in which this surfactant class is used as emulsifier and/or penetrant for active agrochemical ingredients.

Furthermore, WO 2003/000053 describes particular alkyl polypropylene glycol-polyethylene glycols, for example Atlas G5000, as dispersant for organic crop protection products in oils.

The use of ammonium salts to enhance the action of active agrochemical ingredients is known in the literature; for example, WO 2011/131623 (US 2011/0281727 A1, Fischer et al.) describes insecticidal and/or herbicidal formulations

based on heterocyclyl-based tetramic acids having improved efficacy in the presence of ammonium salts. Furthermore, WO 2007/068428 describes activity-enhancing effects of phenyl-substituted cyclic keto-enols in the presence of ammonium salts. WO 2011/131623 is directed to a combination of a single active ingredient selected from a group of substances of the formula [I] and an organic or inorganic ammonium or phosphonium salt, and to the use thereof in an aqueous spray liquor in the presence or absence of a suitable penetrant. Proceeding from the teaching of WO 2011/131623, the expert is unable to draw any conclusions as to formulations with combinations of further active ingredients, or to the physical and chemical stability of these mixture formulations. Suitable penetrants are described in broad terms in paragraphs [0111] to [0171] and generally claimed in [0178], but only rapeseed oil methyl ester is cited as an example of a vegetable oil derivative, and Genapol LRO as an example of an anionic alcohol ether sulfate. Propylene carbonate, with its chemical characteristics, is not in keeping with the examples cited or with the main substances described as penetrants. Thus, it is not possible to establish a direct correlation between a penetration-imparting effect of propylene carbonate for a compound selected from the group of substances of the formula [I] or for compounds that are not covered by the description by formula [I].

A formulation having good penetration an undissolved active ingredient according to the present invention is neither described or suggested in WO 2011/131623.

Oil-based formulations containing ammonium salts are likewise known in the literature. For example, WO 2008/151725 describes adjuvant compositions based on oils in which ammonium salts are in dispersed form. Furthermore, EP 2193712 A1 describes oil-based agrochemical formulations in which ammonium salts are in dispersed form. However, there is no description of suspensions of ammonium salts in water-miscible solvents.

In summary, however, none of the documents cited above, either individually or viewed jointly, gives a pointer that alkyl polypropylene glycol-polyethylene glycols, for example Antarox B/848, can be used as effective dispersants of inorganic ammonium salts at high loading in a polar, water-soluble solvent, such as propylene carbonate, especially in conjunction with suspended active ingredients.

Soluble water-based concentrates of tetramic acid derivatives are known from the prior art, for example from WO 2009/115262. Owing to solubility problems, these are not combinable with particular crop protection products and formulation ingredients. Furthermore, these water-based SL formulations generally have high pH values that likewise lead to incompatibility with particular base-sensitive crop protection products and formulation ingredients.

The problem addressed was thus that of developing a stable formulation that consists of a suspended active ingredient or a combination of suspended active ingredients, has good bioavailability and penetration capacity - of the suspended active ingredient or the combination of suspended active ingredients -, and has good storage stability both at high and low temperatures. The active ingredients are preferably insecticides.

This problem was solved by the formulations described below comprising an active ingredient or an combination of active ingredients and an ammonium salt and a carbonate ester as solvent.

The invention therefore provides insecticidal compositions comprising:

a. at least one active ingredient solid at room temperature, which is preferably insoluble or slightly soluble in the chosen solvent f),

b. at least one ammonium salt,

c. at least one dispersant from the class of the alkyl propoxylate ethoxylates,

d. optionally one or more surfactants,

e. at least one water-insoluble filler,

f. at least one solvent from the group of the carbonate esters, and

g. optionally further adjuvants.

In a preferred embodiment, component d) is obligatory.

In another preferred embodiment, component g) is obligatory.

In another embodiment components d) and g) are obligatory.

Further, the compositions in a preferred embodiment are free of water or essentially free of water.

It has been found in accordance with the invention that corresponding compositions have high stability.

In the present invention, in formulae, e.g. formula (I), optionally substituted radicals, unless stated otherwise, may be mono- or polysubstituted, where the substituents in the case of polysubstitutions may be the same or different.

Moreover, in ranges of preference stated in the present invention, the different levels of preference should be

understood such that they can be combined with one another in permutations, but in any case identical levels of preference and especially the most preferred embodiment/level of preference in each case are to be combined with one another and are indeed disclosed as such a combination.

Compositions as described in the present application that consist solely of the essential components (not optional components) should likewise be considered to be disclosed.

Room temperature in the context of the present invention means, unless stated otherwise, a temperature of 20°C to 25°C.

Components a-g are defined further hereinafter.

a. Active ingredient solid at room temperature

The active ingredient solid at room temperature is preferably selected from the group comprising insecticides, herbicides and fungicides. Further preferably, the active ingredients selected are insoluble or only slightly soluble in the chosen solvent f). Preference is further given to active insecticidal ingredients that are solid at room temperature and are insoluble or only slightly soluble in the chosen solvent f).

Slightly soluble or insoluble active ingredients in the context of the present invention are active ingredients that are solid at room temperature and have a solubility at 20°C in the chosen solvent f) of preferably not more than 5 g/l, further preferably not more than 4 g/l, even further preferably not more than 2.5 g/l, and especially preferably not more than 1 g/l.

Even further preferably, the active ingredients are selected from the group comprising diamide insecticides (broflanilide, chlorantraniliprole, cyantraniliprole, cyclaniliprole, cyhalodiamide, flubendiamide, tetrachlorantraniliprole and tetraniliprole), spinosyns (IRAC group 5), what are called "mectins" (e.g. abamectin, emamectin benzoate, milbemectin; IRAC group 6), ethiprole, triflumuron, deltamethrin and tetronic acid and tetramic acid derivatives (IRAC Group 23, including the compounds of formulae I and II specified below).

In a preferred embodiment, component a) in the compositions according to the invention is a keto-enol based on tetramic acids, preferably compounds of the formula (I)

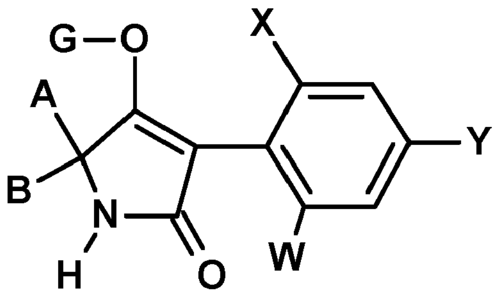

(I)

in which

W and Y are independently hydrogen, $C_1$-$C_4$-alkyl, chlorine, bromine, iodine or fluorine,

X is $C_1$-$C_4$-alkyl, $C_1$-$C_4$-alkoxy, chlorine, bromine or iodine,

A, B and the carbon atom to which they are bonded are $C_3$-$C_6$-cycloalkyl substituted by an optionally $C_1$-$C_4$-alkyl- or $C_1$-$C_4$-alkoxy-$C_1$-$C_2$-alkyl-substituted alkylenedioxy group that forms a 5-membered or 6-membered ketal together with the carbon atom to which it is bonded,

G is hydrogen (a) or is one of the groups

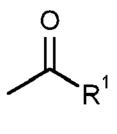 (b), 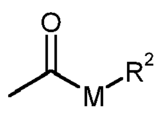 (c), E (d)

in which

E is a metal ion or an ammonium ion,
M is oxygen or sulfur,
$R^1$ is straight-chain or branched $C_1$-$C_6$-alkyl,
$R^2$ is straight-chain or branched $C_1$-$C_6$-alkyl.

Usable with particular preference are tetramic acid derivatives of the abovementioned formula (I) in which the radicals are defined as follows:

W is more preferably methyl,
X is more preferably chlorine or methyl (more preferably methyl),
Y is more preferably chlorine, bromine or methyl,
A, B and the carbon atom to which they are bonded are more preferably saturated $C_6$-cycloalkyl substituted by an alkylenedioxy group that forms a 5-membered or 6-membered ketal together with the carbon atom to which it is bonded,
G is more preferably hydrogen (a) or is one of the groups

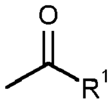 (b), 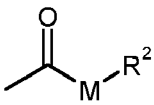 (c), E (d),

in which

M is oxygen,
E is one metal ion equivalent or an ammonium ion (specifically sodium or potassium),
$R^1$ is more preferably straight-chain or branched $C_1$-$C_4$-alkyl,
$R^2$ is more preferably straight-chain or branched $C_1$-$C_4$-alkyl.

Specifically usable are tetramic acid derivatives of the abovementioned formula (I) with G = hydrogen (a).
Likewise specifically usable are tetramic acid derivatives of the abovementioned formula (I) with G = E (d).
Especially preferably usable are tetramic acid derivatives of the abovementioned formula (I) in which the radicals are defined as follows:

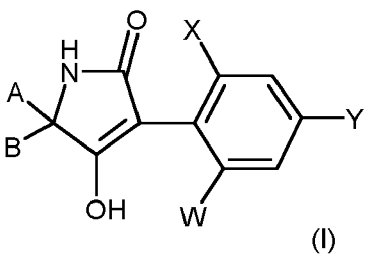

(I)

| Ex. No. | W | X | Y | A | B | **known from** WO 06/089633**; Ex. No.** |
|---|---|---|---|---|---|---|
| I-1 | $CH_3$ | $CH_3$ | $CH_3$ | 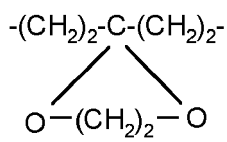 | | I-1-a-2 |
| I-2 | $CH_3$ | $CH_3$ | Cl | 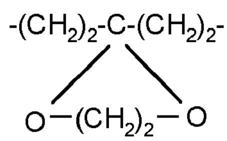 | | I-1-a-4 |

(continued)

| Ex. No. | W | X | Y | A | B | known from WO 06/089633; Ex. No. |
|---|---|---|---|---|---|---|
| I-3 | $CH_3$ | $CH_3$ | Br | 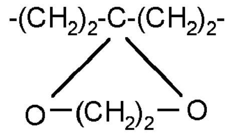 | | I-1-a-26 |
| I-4 | $CH_3$ | $CH_3$ | $CH_3$ | 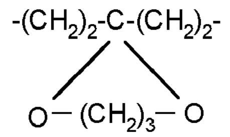 | | I-1-a-18 |
| I-5 | $CH_3$ | $CH_3$ | Cl | 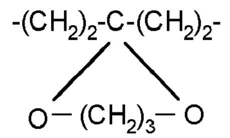 | | I-1-a-14 |
| I-6 | $CH_3$ | $CH_3$ | Br | 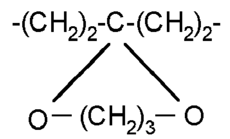 | | I-1-a-19 |

In a particularly preferred embodiment, component a) is a compound of the formula

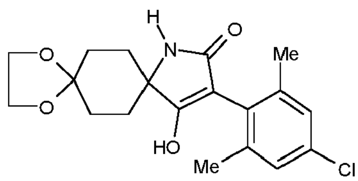
(I-2).

Compound I-2 is preferably used in the form of its most thermodynamically stable polymorphous structure. This crystal structure and further physical data were determined as follows:

Sample preparation:

Compound I-2 ($C_{19}H_{22}ClNO_4$ / MW = 363.84 g/mol) was crystallized from methanol and dried at room temperature to obtain modification A.

Modification A of I-2 can be characterized by x-ray powder diffractometry based on the corresponding diffraction diagrams that have been recorded at 25°C and with Cu-K$\alpha$ 1 radiation (1.5406 Å) (FIGURE 1).

Modification A according to the present invention exhibits at least 3, preferably at least 5, further preferably at least 7, even further preferably at least 10, and most preferably all the reflections as shown in FIGURE 1:
Modification A according to the present invention is also characterized by the x-ray diffraction diagram shown in Figure I.

Crystallographic studies on single crystals of modification A showed that the crystal structure is monoclinic. The unit cell has the $P2_1/c$ space group.

**Table 2:** Crystallographic properties of modification A

| Parameter | *Modification A* |
|---|---|
| Crystal system | Monoclinic |
| Space group | $P2_1/c$ |
| a in A | 11.66544(14) |
| b in Å | 9.50603(10) |

(continued)

| Parameter | *Modification A* |
|---|---|
| c in Å | 16.66907(19) |
| α | 90 |
| β | 110.2045(13) |
| γ | 90 |
| Z | 4 |
| Density (calculated) | 1.393 g/cm$^3$ |
| a, b, c = length of the sides of the unit cell<br>α , β, γ = angles of the unit cell<br>Z = number of molecules in the unit cell | |

**Tables 2a/b:** Crystallographic data/reflections [°2theta] of modification A

| 2a | 2b |
|---|---|
| [°2theta] | Reflections [°2theta] |
| Modification A | Modification A |
| 11.3 | 8.0 |
| 14.6 | 10.8 |
| 16.0 | 11.3 |
| 20.1 | 12.2 |
| 21.7 | 14.6 |
| 22.7 | 16.0 |
| 23.1 | 17.6 |
| 24.5 | 18.4 |
| 28.2 | 19.4 |
| 29.0 | 20.1 |
| | 21.7 |
| | 22.7 |
| | 23.1 |
| | 23.8 |
| | 24.5 |
| | 25.9 |
| | 26.4 |
| | 28.2 |
| | 29.0 |
| | 29.4 |
| | 30.1 |
| | 30.6 |
| | 32.2 |

(continued)

| 2a | 2b |
|---|---|
| [°2theta] | Reflections [°2theta] |
| Modification A | Modification A |
| | 36.2 |
| | 37.4 |
| | 38.2 |
| | 39.1 |

The polymorphous form of modification A of I-1 can be determined by IR spectroscopy using the corresponding spectrum that has been recorded at 25°C using a diamond ATR instrument at a resolution of 4 $cm^{-1}$ (FIGURE 2). Modification A of the present invention exhibits at least 3, preferably at least 5, further preferably at least 7 and more preferably all bands as shown in Figure 2 and described in Table 2c.

Table 2c) IR bands [$cm^{-1}$]

| Band maxima [$cm^{-1}$] | Band maxima [$cm^{-1}$] |
|---|---|
| Modification A | |
| 3378 | 1133 |
| 2969 | 1109 |
| 2955 | 1088 |
| 2943 | 1045 |
| 2924 | 1036 |
| 2876 | 1027 |
| 2858 | 1015 |
| 2326 | 997 |
| 1637 | 980 |
| 1592 | 965 |
| 1575 | 946 |
| 1564 | 936 |
| 1470 | 903 |
| 1444 | 869 |
| 1438 | 856 |
| 1428 | 821 |
| 1394 | 783 |
| 1372 | 769 |
| 1344 | 748 |
| 1325 | 704 |
| 1317 | 691 |
| 1297 | 659 |
| 1272 | 639 |
| 1247 | 625 |
| 1194 | 573 |
| 1157 | 563 |
| | 553 |

In an alternative embodiment, component a) comprises tetramic acids of the formula (II)

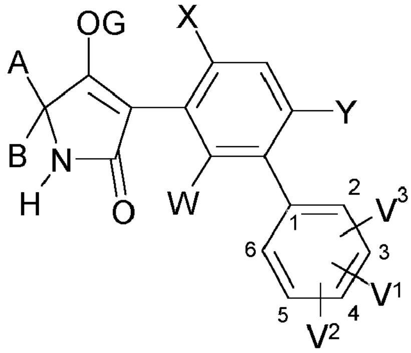

(II)

in which

W and Y are independently hydrogen, $C_1$-$C_4$-alkyl, chlorine, bromine, iodine or fluorine,

X is $C_1$-$C_4$-alkyl, $C_1$-$C_4$-alkoxy, chlorine, bromine or iodine,

$V^1$ is hydrogen, halogen, $C_1$-$C_6$-alkyl, $C_1$-$C_6$-alkoxy, $C_1$-$C_6$-alkylthio, $C_1$-$C_6$-alkylsulfinyl, $C_1$-$C_6$-alkylsulfonyl, $C_1$-$C_4$-haloalkyl, $C_1$-$C_4$-haloalkoxy, nitro or cyano,

$V^2$ is hydrogen, halogen, $C_1$-$C_6$-alkyl or $C_1$-$C_6$-alkoxy,

$V^3$ is hydrogen or halogen,

A, B and the carbon atom to which they are bonded are saturated $C_5$-$C_6$-cycloalkyl in which one ring member has been replaced by oxygen and which is optionally monosubstituted by $C_1$-$C_8$-alkyl, $C_1$-$C_8$-alkoxy or $C_1$-$C_6$-alkyloxy-$C_1$-$C_6$-alkyl,

G is hydrogen (a) or is one of the groups

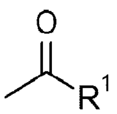 (b), 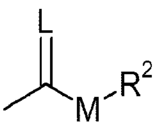 (c), E (d)

in which

E is a metal ion or an ammonium ion,
L is oxygen or sulfur and
M is oxygen or sulfur,
$R^1$ is straight-chain or branched $C_1$-$C_6$-alkyl,
$R^2$ is straight-chain or branched $C_1$-$C_6$-alkyl.

Usable with particular preference are tetramic acid derivatives of the abovementioned formula (I) in which the radicals are defined as follows:

W is more preferably hydrogen or methyl,
X is more preferably chlorine or methyl,
Y is more preferably hydrogen,
$V^1$ is more preferably fluorine or chlorine (specifically fluorine or chlorine in the 4 position),
$V^2$ is more preferably hydrogen or fluorine (specifically fluorine in the 3 position),
$V^3$ is more preferably hydrogen or fluorine (specifically fluorine in the 5 position),
A, B and the carbon atom to which they are bonded are more preferably saturated $C_6$-cycloalkyl in which one ring member has been replaced by oxygen,
G is more preferably hydrogen (a) or is one of the groups

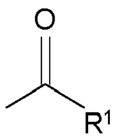 (b), 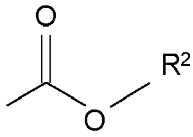 (c), E (d),

in which

E is more preferably one metal ion equivalent or an ammonium ion (specifically sodium or potassium),
$R^1$ is more preferably straight-chain or branched $C_1$-$C_4$-alkyl,
$R^2$ is more preferably straight-chain or branched $C_1$-$C_4$-alkyl.

Specifically usable are tetramic acid derivatives of the abovementioned formula (I) with G = hydrogen (a).
Likewise specifically usable are tetramic acid derivatives of the abovementioned formula (I) with G = E (d).
Especially preferably usable are tetramic acid derivatives of the abovementioned formula (II) in which the radicals are defined as follows:

| Ex. No. | A B | W | X | Y | $V^1$ | $V^2$ | $V^3$ | G | **known from** WO 08/067911 |
|---|---|---|---|---|---|---|---|---|---|
| II- 1 | -(CHz)z-O-(CHz)z- | H | Cl | H | 4-F | H | H | H | I-1-a-13 |
| II-2 | -(CHz)z-O-(CHz)z- | H | Cl | H | 4-F | 3-F | H | H | I-1-a-21 |
| II-3 | -(CHz)z-O-(CHz)z- | H | Cl | H | 4-F | 3-F | 5-F | H | I-1-a-30 |
| II-4 | -(CHz)z-O-(CHz)z- | H | $CH_3$ | H | 4-F | H | H | H | I-1-a-1 |
| II-5 | -(CHz)z-O-(CHz)z- | H | $CH_3$ | H | 4-F | 3-F | H | H | I-1-a-3 |
| II-6 | -(CHz)z-O-(CHz)z- | H | $CH_3$ | H | 4-F | 3-F | 5-F | H | I-1-a-28 |
| II-7 | -(CHz)z-O-(CHz)z- | $CH_3$ | $CH_3$ | H | 4-F | H | H | H | I-1-a-4 |
| II-8 | -(CHz)z-O-(CHz)z- | $CH_3$ | $CH_3$ | H | 4-F | 3-F | H | H | I-1-a-5 |
| II-9 | -(CHz)z-O-(CHz)z- | $CH_3$ | $CH_3$ | H | 4-F | 3-F | 5-F | H | I-1-a-25 |

In a particularly preferred alternative embodiment, a) is

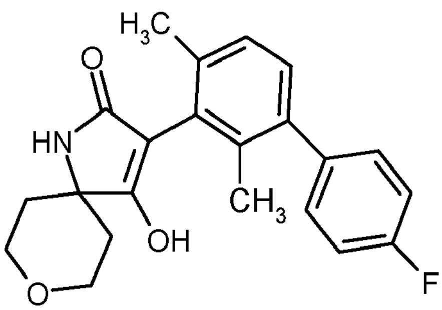

(II-7).

b. Ammonium salt

The ammonium salt is preferably selected from the group comprising water-soluble inorganic ammonium salts.
Further preferably, b) is selected from the group comprising ammonium carbonate, ammonium hydrogensulfate, ammonium sulfate (AMS), ammonium hydrogencarbonate, ammonium carbonate and diammonium hydrogenphosphate (DAHP).
More preferably, b) is DAHP and AMS.

c. Dispersant

Component c) is preferably selected from the group which comprises alkyl polypropylene glycol-polyethylene

glycol compound of the general formula (III-a)

R-O-A-B-H **(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units.

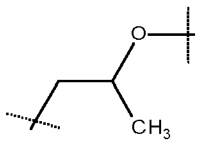

**Formula III-b**

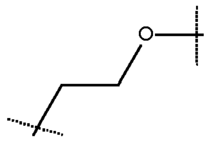

**Formula III-c**

Examples of "alkyl polypropylene glycol-polyethylene glycol compounds" are:

| Trade name | Manufacturer |
|---|---|
| Antarox B/848 | Solvay |
| Antarox BL-470 | Solvay |
| Antarox BL-480 | Solvay |
| Atlas G 5000 | Croda |
| Atlas G 5002 | Croda |
| Emulsogen 3510 | Clariant |
| Emulsogen EP 4901 | Clariant |
| Ethylan NS 500 K | Akzo Nobel |
| Ethylan NS 500 LQ | Akzo Nobel |
| Ethylan NS 505 K | Akzo Nobel |
| Lucramul AG 411 | Levaco |
| Synergen 848 | Clariant |
| Termul 5429 | Huntsman |
| Tergitol XD | Dow |
| Toximul 8320 | Stepan |
| Toximul 8325 | Stepan |
| Ultraric 5000 | Oxiteno |

and the compounds of the general formula (IIId)

$$R\text{-}O\text{-}(C_mH_{2m}O)_x\text{-}\ (C_nH_{2n}O)_y\text{-}R' \qquad \text{(IIId)}$$

in which the individual radicals and indices have the following definitions:

R and R' are independently hydrogen, a linear $C_1$- to Cs-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3.

In the context of the present invention, a linear $C_1$- to Cs-alkyl radical is understood to mean a methyl radical, an ethyl radical, an n-propyl radical, an n-butyl radical or an n-pentyl radical.

In the context of the present invention, a branched $C_3$- to $C_4$-alkyl radical is understood to mean an isopropyl radical, an isobutyl radical or a tert-butyl radical.

In a preferred embodiment, the R and R' radicals are independently selected from the group consisting of a methyl radical, an n-butyl radical and hydrogen.

In an even more preferred embodiment, the R and R' radicals are independently selected from the group consisting of an n-butyl radical and hydrogen.

With regard to the arrangement of the polyethylene and polypropylene units,

(a) either m may assume the value of 2 and n the value of 3;

(b) or m may assume the value of 3 and n the value of 2.

Preference is given to configuration (b) with m = 3 and n = 2.

Very particular preference is given to alkyl polypropylene glycol-polyethylene glycol compounds of the formula (IIId) in which

m is 3,
n is 2,
x is 5 to 80,
y is 5 to 80,
R is n-butyl or hydrogen and
R' is hydrogen.

d. Suitable surfactants d) in the context of the present invention are selected from the group comprising:

d1) surfactants of the polycarboxylate type, for example those such as hydrophobically modified comb-like polymers, for example polyacrylic acid, polymethacrylic acid, polymaleic acid, polymaleic anhydride, a copolymer of maleic acid or maleic anhydride with an olefin (such as isobutylene or diisobutylene), a copolymer of acrylic acid and itaconic acid, a copolymer of methacrylic acid and itaconic acid, a copolymer of maleic acid or maleic anhydride and styrene, a copolymer of acrylic acid and methacrylic acid, a copolymer of acrylic acid and methacrylate, a copolymer of acrylic acid and vinyl acetate, a copolymer of styrene and methacrylic acid, modified copolymers of styrene and methacrylic acid, a copolymer of maleic acid or maleic anhydride and acrylic acid, an N-methyl fatty acid (e.g. $C_8$-$C_{18}$)-sarcosinate, a carboxylic acid such as a resin acid or a fatty acid (e.g. $C_8$-$C_{18}$) or a salt of such a carboxylic acid. The abovementioned copolymers may also be in the form of their salts, e.g. alkali metal salts (preferably Li, Na, K), alkaline earth metal salts (preferably Ca, Mg), ammonium or various amines. Examples of those described above include Geropon T/36, Geropon TA/72, Tersperse 2700, Atlox Metasperse 550 S, Geropon Ultrasperse, Narlex D-72, Versa TL3 and Agrilan 789 Dry, and

d2) surfactants selected from the group consisting of salts of sulfated formaldehyde condensation products with alkylaromatics, e.g. MORWET D-425 (from Akzo Nobel); OPARYL DT 120, OPARYL DT 201, OPARYL DT 530 (from Bozzetto); TERSPERSE 2020 (from Huntsman) and salts of sulfated formaldehyde condensation products with ditolyl ether (e.g. BAYKANOL SL, from Levaco) and salts of sulfated formaldehyde condensation products with cyclohexanone (e.g. LUCRAMUL DAC 210, from Levaco), and

d3) surfactants selected from the group of the lignosulfonates and salts thereof, preferably selected from the group of lignosulfonates and salts thereof consisting of Borresperse NA, Borresperse 3A, Ultrazine NA, Ufoxane 3A, Vanisperse CB, Marasperse AG, MARASPERSE N 22, MARASPERSE C 21, MARASPERSE CBOS-4, WAFEX CA122 and Borresperse CA from Borregaard; KRAFTSPERSE EDF-350, KRAFTSPERSE 25M, KRAFTSPERSE EDF-450, REAX 100M, REAX 83A, REAX 85A, REAX 88A, REAX 88B, REAX 907, REAX 910, POLYFON H, POLYFON O and POLYFON T from Ingevity; AGRINOL DN 19 and Agrinol C12 from Tembec, and

d4) surfactants selected from the group consisting of sulfated alkylarylsulfonates and salts thereof, e.g. alkylarylsulfonates and salts thereof such as, for example, AEROSOL OS (from Solvay); AGNIQUE ANS 3DNP-U, AGNIQUE ANS 4DNP, AGNIQUE NSC 2NP-U, NEKAL BX DRY (from BASF); MORWET B, MORWET DB, MORWET EFW,

MORWET IP (from Akzo Nobel); OPARYL MT 704, OPARYL MT 800, OPARYL MT 804 (from Bozzetto); RHODACAL BX 78, SUPRAGIL WP (from Solvay); SURFOM HRB (from Oxiteno), and

d5) surfactants from the group of the di-/tristyrylphenol ethoxylate phosphates and salts thereof, DISPERSOGEN LFH, DISPERSOGEN TP 160 (from Clariant); LUCRAMUL PPS 16, LUCRAMUL PPS K 16 (from Levaco); PHOSPHOLAN PHB 14 (from Akzo Nobel); SOPROPHOR 3 D 33, SOPROPHOR TS 20-F, SOPROPHOR FL, SOPROPHOR FLK (from Solvay); STEPFAC TSP-PE, STEPFAC TSP PE-K (from Stepan); SURFOM 1323 SC, SURFOM 1325 SC (from Oxiteno); TERSPERSE 2222 (from Huntsman); and from the group of the alcohol ethoxylate phosphates, e.g. EMPIPHOS 03 D (from Akzo Nobel); MULTITROPE 1214, Crodafos series, Atphos 3226 (from Croda); PHOSPHOLAN PE 169 (from Akzo Nobel); RHODAFAC RS-410, RHODAFAC RS-710, RHODAFAC TD 20 F (from Solvay); SERVOXYL VPDZ 20/100 (from Elementis); STEPFAC 8180 (from Stepan); CRAFOL AP261 (from BASF); GERONOL CF/AR (from Clariant).

Further preferably, suitable surfactants are selected from the group comprising surfactants d1), d2), d3), and d4).
Further preferably, suitable surfactants are selected from the group comprising surfactants d1), d2), and d3).
Even further preferably, suitable surfactants are selected from the group comprising surfactants d1) and d2).
More preferably, suitable surfactants are selected from the group comprising surfactants d1).
Very particular preference is given to surfactants from group d1) comprising sodium salts of the copolymers of maleic acid and olefins (e.g. Geropon T/36 / Solvay; Duramax D-305 / Dow); and sodium salts of copolymers of methacrylic acid and styrene (Tersperse 2700 / Huntsman; Atlox Metasperse 500S / Croda); especially sodium salts of the copolymers of maleic acid and olefins (e.g. Geropon T/36).
Suitable surfactants such as Tersperse 2700 are also described in WO 2008036865 A2.
The above-described surfactants can be used either individually or in combination, preference being given to combinations of the surfactants selected from the group of the sodium salts of the copolymers of maleic acid and olefins with salts of sulfated formaldehyde condensation products with alkylaromatics and lignosulfonates and salts thereof.

e. Water-insoluble filler

Suitable fillers are preferably chosen from the group comprising

e1) modified natural silicates such as chemically modified bentonites, hectorites, attapulgites, montmorillonites, smectites or other silicate minerals such as Bentone® (Elementis), Attagel® (BASF), Agsorb® (Oil-Dri Corporation), Pangel B (Tolsa) or Hectorite® (Akzo Nobel),

e2) synthetic silicates and fumed silicas, such as silicates from the Sipernat®, Aerosil® or Durosil® series (Degussa), the CAB-O-SIL® series (Cabot) or the Van Gel series (R.T. Vanderbilt), and

e3) fillers based on synthetic polymers, such as thickeners from the Thixin® or Thixatrol® series (Elementis).

Further preferred are fillers of group e2.
Particular preference is given to fumed silicas as filler e), such as Aerosil products, Aerosil R products and Cab-O-Sil products, and also attapulgites, alone and in mixtures.

f. Solvent

The solvent f) is preferably selected from the group of the carbonate esters, further preferably from the group comprising dimethyl carbonate, diethyl carbonate, dipropyl carbonate, diisopropyl carbonate, dibutyl carbonate and isomers thereof, diphenyl carbonate, ethylene carbonate, trimethylene carbonate, propylene carbonate, glycerol carbonate, butylene carbonate, pentylene carbonate, hexylene carbonate and octylene carbonate.
Even further preferably, f) is selected from the group of the cyclic carbonate esters, i.e. carbonic esters in which the diol is bridged, as, for example, in the case of propane-1,3-diol, which forms trimethylene carbonate with carbonic acid, or propane-1,2-diol, which forms propylene carbonate with carbonic acid.
More preferably, f) is propylene carbonate.

g. Further adjuvants

The compositions of the invention optionally comprise further adjuvants g), for example optionally substances from the group of the emulsifiers, the humectants, the foam inhibitors, the preservatives, the dyes, the stabilizers and

the antioxidants.

Useful emulsifiers include all customary nonionogenic, anionic, cationic and zwitterionic substances having surface-active properties that are typically used in agrochemical products. These substances include reaction products of fatty acids, fatty acid esters, fatty alcohols, fatty amines, alkylphenols or alkylarylphenols with ethylene oxide and/or propylene oxide and/or butylene oxide and the sulfuric esters thereof, phosphoric monoesters and phosphoric diesters, and also reaction products of ethylene oxide with propylene oxide, and additionally alkylsulfonates, alkyl sulfates, aryl sulfates, tetraalkylammonium halides, trialkylarylammonium halides, alkylamine sulfonates, end group-capped and non-end group-capped alkoxylated linear and branched, saturated and unsaturated alcohols (e.g. butoxy polyethylene-propylene glycols), and polyethylene glycols and polypropylene glycols.

The emulsifiers may be used individually or else in a mixture. Preferred examples include reaction products of castor oil with ethylene oxide in a molar ratio of 1:20 to 1:60, reaction products of C6-C20 alcohols with ethylene oxide in a molar ratio of 1:5 to 1:50, reaction products of C6-C20 alcohols with propylene oxide and ethylene oxide in a molar ratio of 1:1:1 to 1:5:10, reaction products of fatty amines with ethylene oxide in a molar ratio of 1:2 to 1:25, reaction products of 1 mol of phenol with 2 to 3 mol of styrene and 10 to 50 mol of ethylene oxide, reaction products of C8-C12-alkylphenols with ethylene oxide in a molar ratio of 1:5 to 1:30, alkyl glycosides, C8-C16-alkylbenzenesulfonic salts, for example calcium, monoethanolammonium, diethanolammonium and triethanolammonium salts.

Useful humectants are all substances typically usable for this purpose in agrochemical compositions. Preference is given to water-soluble liquids, and examples include glycerol.

Useful foam inhibitors are all substances typically usable for this purpose in agrochemical compositions. Preference is given to silicone oils, e.g. SAG1572, and magnesium stearate.

Useful antioxidants are all substances typically usable for this purpose in agrochemical compositions. Preference is given to butylhydroxytoluene.

Useful dyes are all substances typically usable for this purpose in agrochemical compositions. Examples include titanium dioxide, pigment black, zinc oxide and blue pigments, and also Permanent Red FGR.

Possible stabilizers used may, for example, be acids or bases. Examples of acids include citric acid, formic acid, acetic acid or boric acid. Examples of bases include sodium salts of carboxylic acids and mono- or poly-alkyl-substituted amines.

In a preferred embodiment, the invention provides an insecticidal composition comprising:

a. compounds of the formula (I)

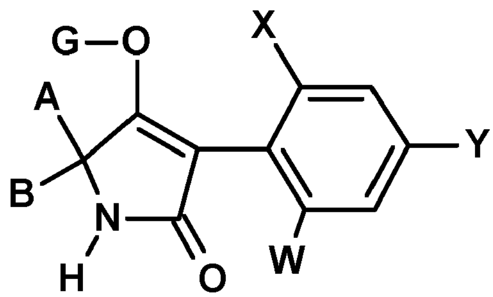

where the compounds of the formula (I) have the following definitions:

| | |
|---|---|
| W | is methyl, |
| X | is chlorine or methyl, |
| Y | is chlorine, bromine or methyl, |
| A, B | and the carbon atom to which they are bonded are saturated C6-cycloalkyl substituted by an alkylenedioxy group which, together with the carbon atom to which it is bonded, forms a 5-membered or 6-membered ketal, |
| G | is hydrogen (a) or is one of the groups |

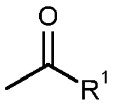 (b), 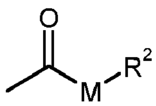 (c), E (d),

in which

M is oxygen,

E is one metal ion equivalent or an ammonium ion,

$R^1$ is straight-chain or branched $C_1$-$C_4$-alkyl,

$R^2$ is straight-chain or branched $C_1$-$C_4$-alkyl.

b. at least one ammonium salt selected from the group comprising ammonium carbonate, ammonium hydrogensulfate, ammonium sulfate (AMS), ammonium hydrogencarbonate, ammonium carbonate and diammonium hydrogenphosphate (DAHP),

c. at least one dispersant selected from the group comprising alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

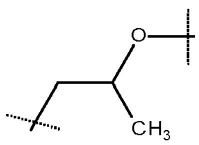

**Formula III-b**

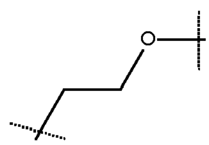

**Formula III-c**

and alkyl polypropylene glycol-polyethylene glycol compounds of the general formula (IIId)

$R-O-(C_mH_{2m}O)_x- (C_nH_{2n}O)y-_{R}'$ (IIId)

in which the individual radicals and indices have the following definitions:

R and R’ are independently hydrogen, a linear $C_1$- to Cs-alkyl radical or a branched $C_3$- or $C_4$-alkyl radical;

m is 2 or 3;

n is 2 or 3;

x is 5 to 150; and

y is 5 to 150,

where one radical n or m has the meaning of 2 and the other radical n or m has the meaning of 3,

d. at least one surfactant selected from the group comprising polycarboxylate types, salts of sulfated formaldehyde

condensation products with alkylaromatics, salts of sulfated formaldehyde condensation products with ditolyl ether, salts of sulfated formaldehyde condensation products with cyclohexanone, lignosulfonates and salts thereof, sulfated alkylarylsulfonates and the salts thereof.

e. at least one filler selected from the group comprising modified natural silicates, silicate minerals, synthetic silicates and fumed silicas, attapulgites and fillers based on synthetic polymers.

f. at least one solvent selected from the group of the carbonate esters,

g. optionally further adjuvants.

In a further-preferred embodiment, the invention provides an insecticidal composition comprising:
a. compound of the formula (I) selected from the following compounds:

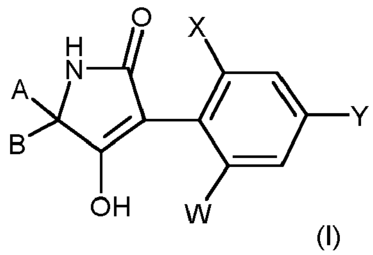

(I)

| W | X | Y | A | B |
|---|---|---|---|---|
| $CH_3$ | $CH_3$ | $CH_3$ | 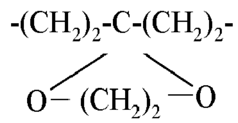 | |
| $CH_3$ | $CH_3$ | Cl | 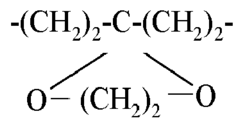 | |
| $CH_3$ | $CH_3$ | Br | 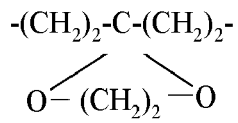 | |
| $CH_3$ | $CH_3$ | $CH_3$ | 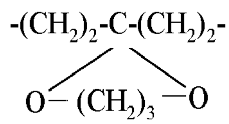 | |
| $CH_3$ | $CH_3$ | Cl | 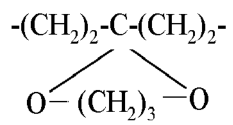 | |
| $CH_3$ | $CH_3$ | Br | 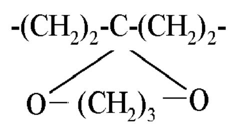 | |

b. at least one ammonium salt selected from the group comprising ammonium carbonate, ammonium hydrogensulfate, ammonium sulfate (AMS), ammonium hydrogencarbonate, ammonium carbonate and diammonium hydrogenphosphate

(DAHP),

c. at least one dispersant selected from the group comprising alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment, A is a polypropylene glycol fragment consisting of 10 to 40 propylene oxide (PO) units (formula III-b), preferably consisting of 15-35 PO units, more preferably consisting of 20-30 PO units,

B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

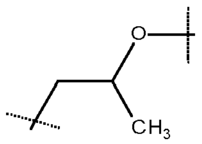

**Formula III-b**

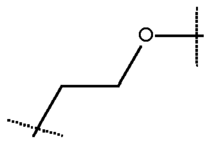

**Formula III-c**

and alkyl polypropylene glycol-polyethylene glycol compounds of the general formula (IIId)

$R\text{-}O\text{-}(C_mH_{2m}O)_x\text{-}\ (C_nH_{2n}O)_y\text{-}R'$ (IIId)

in which the individual radicals and indices have the following definitions:

R and R' are independently hydrogen, a linear $C_1$- to Cs-alkyl radical or a branched $C_3$- or $C_4$-alkyl radical;

m is 2 or 3;

n is 2 or 3;

x is 5 to 150; and

y is 5 to 150,

where one radical n or m has the meaning of 2 and the other radical n or m has the meaning of 3,

d. at least one surfactant selected from the group comprising polycarboxylate types, salts of sulfated formaldehyde condensation products with alkylaromatics, salts of sulfated formaldehyde condensation products with ditolyl ether, salts of sulfated formaldehyde condensation products with cyclohexanone, and lignosulfonates and salts thereof,

e. at least one filler selected from the group comprising modified natural silicates, silicate minerals, synthetic silicates and fumed silicas, attapulgites and fillers based on synthetic polymers.

f. at least one solvent selected from the group comprising dimethyl carbonate, diethyl carbonate, dipropyl carbonate, diisopropyl carbonate, dibutyl carbonate and isomers thereof, diphenyl carbonate, ethylene carbonate, trimethylene carbonate, propylene carbonate, butylene carbonate, pentylene carbonate, hexylene carbonate and octylene carbonate,

g. optionally further adjuvants.

In a particularly preferred embodiment, the invention provides an insecticidal composition comprising:

a. compound having the formula (I-2) having the following structure:

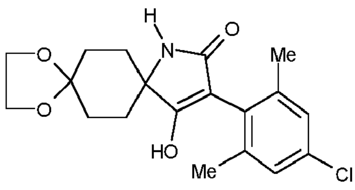 (I-2)

b. at least one ammonium salt selected from the group comprising ammonium sulfate (AMS) and diammonium hydrogenphosphate (DAHP),

c. at least one dispersant selected from the group comprising alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

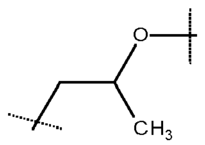

**Formula III-b**

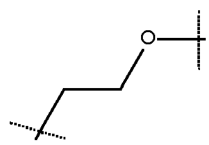

**Formula III-c**

and alkyl polypropylene glycol-polyethylene glycol compounds of the general formula (IIId)

$R\text{-}O\text{-}(C_mH_{2m}O)_x\text{-} (C_nH_{2n}O)_y\text{-}R'$ (IIId)

in which the individual radicals and indices have the following definitions:

R and R' are independently hydrogen, a linear $C_1$- to Cs-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3,

d. at least two surfactants, one selected from the group comprising polycarboxylate types, and one selected from the group comprising salts of sulfated formaldehyde condensation products with alkylaromatics.

e. at least one filler selected from the group comprising fumed silicas and attapulgites.

f. at least one solvent selected from the group comprising propylene carbonate,

g. optionally further adjuvants.

Compound I-2 is preferably used in the form of its most thermodynamically stable polymorphous structure.
Percentages - unless stated otherwise - should be regarded as percentages by weight, where the % by weight of the compositions add up to 100.

The proportions of the individual components which follow are each based on the total weight of the composition, where the proportion up to 1 litre of the overall composition is made up by component f) (solvent). The proportion of component f) is thus preferably of 1% to 80% by weight, further preferably of 20-60% by weight.

The proportion of the solid active ingredient (component a) in the compositions according to the invention is

preferably 0.5-30% by weight,

further preferably 1-20% by weight, and

more preferably 1-15% by weight.

The proportion of the ammonium salt (component b) in the compositions according to the invention is

preferably 1-40% by weight,

further preferably 5-35% by weight, and

more preferably 15-30% by weight.

The proportion of the dispersant (component c) in the compositions according to the invention is

preferably 0.5-40% by weight,

further preferably 2.5-35% by weight, and

more preferably 5-30% by weight.

The proportion of the surfactant (component d) in the compositions according to the invention is

preferably 0-10% by weight,

further preferably 0.3-8% by weight, and

more preferably 0.5-2.5% by weight.

The proportion of the filler (component e) in the compositions is

preferably 0.1-10% by weight,

further preferably 0.5-10% by weight, and

more preferably 2-10% by weight.

The proportion of the further adjuvants (component g) - if present - in the compositions according to the invention is

preferably 0-10% by weight,

further preferably 0.01-8% by weight, and

more preferably 0.05-6% by weight.

A preferred embodiment of the invention is compositions comprising components

a) 1-30% by weight

b) 1-40% by weight

c) 1-40% by weight

d) 0-10% by weight

e) 0.1-15% by weight

g) 0-10% by weight

f) to one litre.

A further-preferred embodiment of the invention is compositions comprising components

a) 2-20% by weight

b) 5-35% by weight

c) 5-35% by weight

d) 0.3-8% by weight

e) 0.5-12.5% by weight

g) 0.01-8% by weight

f) to one litre.

An even further-preferred embodiment of the invention is compositions comprising components

a) 2-15% by weight

b) 15-30% by weight

c) 10-30% by weight

d) 0.5-2.5% by weight

e) 1-10% by weight

g) 0.05-6% by weight

f) to one litre.

The present invention further relates to adjuvant combinations for insecticidal active ingredient formulations having at least one active ingredient in solid form for improving the penetration of both active ingredients, comprising

b. at least one ammonium salt, and

c. at least one dispersant from the class of the alkyl propoxylated ethoxylates.

In a preferred embodiment, the adjuvant combination further comprises

f. at least one solvent from the group of the carbonate esters.

The ammonium salt from the adjuvant combination is preferably selected from the group comprising water-soluble inorganic ammonium salts.
Further preferably, b) is selected from the group comprising ammonium carbonate, ammonium hydrogensulfate, ammonium sulfate (AMS), ammonium hydrogencarbonate, ammonium carbonate and diammonium hydrogenphosphate (DAHP).

More preferably, b) is DAHP and AMS.

Component c) (dispersant) of the adjuvant combination is preferably selected from the group comprising alkyl polypropylene glycol-polyethylene glycol compound of the general formula (III-a)

$$R-O-A-B-H$$

**(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO-) units (formula III-c) together with 0-10 propylene glycol (PO-) units, preferably consisting of 20-40 EO units together with 0-8 PO units, more preferably consisting of 30-40 EO units together with 0-5 PO units.

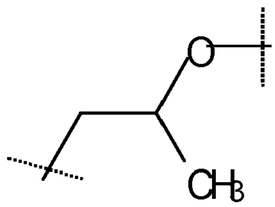

**Formula III-b**

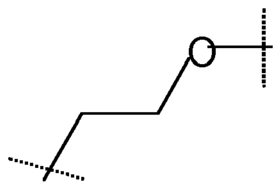

**Formula III-c**

**Formula III-b Formula III-c**

Examples of "alkyl polypropylene glycol-polyethylene glycol compounds" are:

| Trade name | Manufacturer |
|---|---|
| Antarox B/848 | Solvay |
| Antarox BL-470 | Solvay |
| Antarox BL-480 | Solvay |
| Atlas G 5000 | Croda |
| Atlas G 5002 | Croda |
| Emulsogen 3510 | Clariant |
| Emulsogen EP 4901 | Clariant |
| Ethylan NS 500 K | Akzo Nobel |
| Ethylan NS 500 LQ | Akzo Nobel |
| Ethylan NS 505 K | Akzo Nobel |
| Lucramul AG 411 | Levaco |
| Synergen 848 | Clariant |
| Termul 5429 | Huntsman |
| Tergitol XD | Dow |
| Toximul 8320 | Stepan |
| Toximul 8325 | Stepan |
| Ultraric 5000 | Oxiteno |

and the compounds of the general formula (IIId)

$$R\text{-}O\text{-}(C_mH_{2m}O)_x\text{-}(C_nH_{2n}O)_y\text{-}R' \qquad \text{(IIId)}$$

in which the individual radicals and indices have the following definitions:

R and R' are independently hydrogen, a linear $C_1$- to Cs-alkyl radical or a branched $C_3$- or $C_4$-alkyl radical;

m is 2 or 3;

n is 2 or 3;

x is 5 to 150; and

y is 5 to 150,

where one radical n or m has the meaning of 2 and the other radical n or m has the meaning of 3.

In the context of the present invention, a linear $C_1$- to Cs-alkyl radical is understood to mean a methyl radical, an ethyl radical, an n-propyl radical, an n-butyl radical or an n-pentyl radical.

In the context of the present invention, a branched $C_3$- or $C_4$-alkyl radical is understood to mean an isopropyl radical, an isobutyl radical or a tert-butyl radical.

In a preferred embodiment, the R and R' radicals are independently selected from the group consisting of a methyl radical, an n-butyl radical and hydrogen.

In an even more preferred embodiment, the R and R' radicals are independently selected from the group consisting of an n-butyl radical and hydrogen.

With regard to the arrangement of the polyethylene and polypropylene units,

(a) either m may assume the value of 2 and n the value of 3;

(b) or m the value of 3 and n the value of 2.

Preference is given to configuration (b) with m = 3 and n = 2.

Very particular preference is given to alkyl polypropylene glycol-polyethylene glycol compounds of the formula (IIId) in which

m is 3,
n is 2,
x is 5 to 80,
y is 5 to 80,
R is n-butyl or hydrogen and
R' is hydrogen.

The solvent f) used with the adjuvant combination is preferably selected from the group of the carbonate esters, further preferably from the group comprising dimethyl carbonate, diethyl carbonate, dipropyl carbonate, diisopropyl carbonate, dibutyl carbonate and its isomers, diphenyl carbonate, ethylene carbonate, trimethylene carbonate, propylene carbonate, butylene carbonate, pentylene carbonate, hexylene carbonate and octylene carbonate.

Even further preferably, f) is selected from the group of the cyclic carbonate esters, i.e. carbonic esters in which the diol is bridged, as in the case of propane-1,3-diol for example, which forms trimethylene carbonate with carbonic acid.

More preferably, f) is propylene carbonate.

A preferred embodiment of the invention is adjuvant combinations having a ratio (based in each case on the mass) of b) to c) of 3:1 to 1:3, preferably of 2:1 to 1:2 and more preferably of 1.3:1 to 1:1.3.

The proportion of the adjuvant combination based on the weight of the overall formulation is preferably

b) 1-40% by weight

c) 1-40% by weight,
further preferably

b) 5-35% by weight

c) 5-35% by weight, and
even further preferably

b) 15-30 % by weight

c) 10-30% by weight.

The application rate of the formulations according to the invention can be varied within a relatively wide range. It is guided by the respective active ingredients and by the content thereof in the compositions.

With the aid of the compositions according to the invention, the insecticidal active ingredient mixtures can be deployed in a particularly advantageous manner on plants and/or their habitat.

The compositions according to the invention can be used to treat all plants and parts of plants. Plants in this context are understood to include all plants and plant populations, such as desired and unwanted wild plants or crop plants (including naturally occurring crop plants). Crop plants may be plants which can be obtained by conventional breeding and optimization methods or by biotechnological and genetic engineering methods or combinations of these methods, including the transgenic plants and including the plant cultivars which are protectable or non-protectable by plant breeders' rights. Parts of plants shall be understood to mean all parts and organs of the plants above and below ground, such as shoot, leaf, flower and root, examples given being leaves, needles, stalks, stems, flowers, fruit bodies, fruits and seeds, and also tubers, roots and rhizomes. Plant parts also include harvested material and vegetative and generative propagation material, for example cuttings, tubers, rhizomes, shoots and seeds.

Preferably, the formulations according to the invention are used by spray application against animal pests from the following pest families:

Preference is given from the family of the woolly aphids (Pemphigidae) to: Eriosoma spp., Pemphigus spp., in crops such as, for example, citrus fruit, pomaceous fruit, stone fruit, leaf vegetables, root and tuber vegetables and ornamental plants.

Preference is given from the family of the grape lice (Phylloxeridae) to: Phylloxera spp. in grapevines, nuts, citrus fruit.

Preference is given from the family of the jumping plant lice (Psyllidae) to: Psylla spp., Paratrioza spp., Tenalaphara spp., Diaphorina spp., Trioza spp., in crops such as, for example, pomaceous fruit, stone fruit, citrus fruit, vegetables, potatoes, in tropical crops.

Preference is given from the family of the soft scales (Coccidae) to: Ceroplastes spp., Drosicha spp., Pulvinaria spp., Protopulminaria spp., Saissetia spp., Coccus spp., in perennial crops such as, for example, citrus fruit, pomaceous fruit, stone fruit, olives, grapevines, coffee, tea, tropical crops, ornamental plants, vegetables.

Preference is given from the family of the armoured scale insects (Diaspididae) to: Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in crops such as, for example, citrus fruit, pomaceous fruit, stone fruit, almonds, pistachios, nuts, olives, tea, ornamental plants, grapevines, tropical crops.

Preference is given from the family of the ensign scales (Ortheziidae) to: Orthezia spp. in citrus fruit, pomaceous fruit, stone fruit.

Preference is given from the family of the mealy bugs (Pseudococcidae) to: Pericerga, Pseudococcus spp., Planococcus spp., Dysmicoccus spp., in crops such as, for example, citrus fruit, stone fruit and pomaceous fruit, tea, grapevines, vegetables, ornamental plants and tropical crops.

Preference is furthermore given from the family of the whiteflies (Aleyrodidae) to: Bemisia tabaci, Bemisia argentifolii, Trialeurodes vaporariorum, Aleurothrixus floccosus, Aleurodes spp., Dialeurodes spp., Parabemisia myricae in crops such as, for example, vegetables, melons, potatoes, tobacco, soft fruit, citrus fruit, ornamental plants, cotton, soya beans and tropical crops.

Moreover, preference is given from the family of the aphids (Aphidae) to:

Myzus spp. in tobacco, stone fruit, soft fruit, fruit vegetables, leafy vegetables, tuber and root vegetables, melons, potatoes, ornamental plants, spices,

Acyrthosiphon onobrychis in vegetables,

Aphis spp. in tobacco, citrus fruit, pomaceous fruit, stone fruit, melons, strawberries, soft fruit, fruit vegetables, leafy vegetables, tuber, stem and root vegetables, ornamental plants, potatoes, pumpkins, spices,

Rhodobium porosum in strawberries,

Nasonovia ribisnigri in leafy vegetables,

Macrosiphum spp. in ornamental plants, potatoes, leafy vegetables and fruit vegetables, strawberries,

Phorodon humuli in hops,

Brevicoryne brassicae in leafy vegetables,

Toxoptera spp. in citrus fruit, stone fruit, almonds, nuts, spices,

Aulacorthum spp. in citrus fruit, potatoes, fruit vegetables and leafy vegetables,

Anuraphis cardui in vegetables,

Brachycaudus helycrisii in sunflowers,

Acyrthosiphon onobrychis in vegetables.

Likewise, preference is given from the family of the thrips (Thripidae) to: Anaphothrips spp., Baliothrips spp., Caliothrips spp., Frankliniella spp., Heliothrips spp., Hercinothrips spp., Rhipiphorothrips spp., Scirtothrips spp., Kakothrips spp., Selenothrips spp. and Thrips spp., in crops such as, for example, fruit, cotton, grapevines, tea, nuts, tropical crops, ornamental plants, conifers, tobacco, spices, vegetables, soft fruit, melons, citrus fruit and potatoes.

Moreover, preference is given from the families of the leaf-miner flies (Agromyzidae) and root-maggot flies (Anthomyiidae) to: Agromyza spp., Amauromyza spp., Atherigona spp., Chlorops spp., Liriomyza spp., Oscinella spp., Pegomyia spp. in crops such as, for example, vegetables, melons, potatoes, nuts, ornamental plants.

Preference is given from the families of the leafhoppers (Cicadellidae) and planthoppers (Delphacidae) to: Circulifer spp., Dalbus spp., Empoasca spp., Erythroneura spp., Homalodisca spp., Iodioscopus spp., Laodelphax spp., Nephotettix spp., Nilaparvata spp., Oncometopia spp., Sogatella spp., in crops such as, for example, citrus fruit, fruit, grapevines, potatoes, vegetables, ornamental plants, conifers, melons, soft fruit, tea, nuts, rice and tropical crops.

Preference is given from the family of the leaf-miner moths (Gracillariidae) to:
Caloptilia spp., Gracillaria spp., Lithocolletis spp., Leucoptera spp., Phtorimaea spp., Phyllocnistis spp. in crops such as pomaceous fruit, stone fruit, grapevines, nuts, citrus fruit, conifers, potatoes, coffee.

Preference is given from the family of the gall midges (Cecidomyiidae) to:
Contarinia spp., Dasineura spp., Diplosis spp., Prodiplosis spp., Thecodiplosis spp., Sitodiplosis spp., Haplodiplosis spp. in crops such as citrus fruit, pomaceous fruit, stone fruit, vegetables, potatoes, spices, soft fruit, conifers, hops.

Likewise, preference is given from the family of the fruit flies (Tephritidae) to:
Anastrepha spp., Ceratitis spp., Dacus spp., Rhagoletis spp. in crops such as vegetables, soft fruit, melons, pomaceous and stone fruit, ornamental plants, potatoes, grapevines, tropical crops, citrus fruit, olives.

Moreover, preference is given to mites from the families of the spider mites (Tetranychidae) and the gall mites (Eriophydae):
Tetranychus spp., Panonychus spp., Aculops spp. in crops such as vegetables, potatoes, ornamental plants, citrus fruit, grapevines, conifers.

The inventive treatment of the plants and parts of plants with the compositions according to the invention is effected directly or by allowing the compositions to act on their surroundings, environment or storage space by the customary treatment methods, for example by drenching, immersion, spraying, evaporation, fogging, scattering, painting on and, in the case of propagation material, in particular in the case of seeds, also by applying one or more coats.

Preferably, the plant to be treated is selected from the group consisting of cotton, soya beans, tobacco, vegetables, spices, ornamental plants, conifers, citrus plants, fruit, tropical crops, nuts and grapevines.

Preferably, the composition according to the invention acts against pests from the families of the woolly aphids, grape lice, jumping plant lice, soft scales, armoured scale insects, ensign scales, mealy bugs, whiteflies, aphids, thrips, leafhoppers, planthoppers, leaf-miner flies, gall midges, fruit flies, leaf-miner moths, spider mites, gall mites.

It has also been found that the compositions according to the invention can be produced by a process having the steps of:

1) mixing ingredients (a) to (g) with subsequent homogenization and bead grinding. Relevant equipment for homogenization and bead grinding is known to those skilled in the art.

This process too forms part of the subject-matter of the invention.

Finally, it has been found that the compositions according to the invention are of very good suitability for application of the active agrochemical ingredients present to plants and/or the habitat thereof. This process too forms part of the subject-matter of the invention. The examples which follow illustrate the subject-matter of the invention without limiting it.

**Materials used in the examples:**

| Trade name | CAS No. | Manufacturer/ supplier | Chemical name |
|---|---|---|---|
| Geropon T/36 | 37199-81-8 | Solvay | Maleic anhydride 2,4,4-trimethylpentene polymer sodium salt |
| Borresperse NA | 8061-51-6 | Borregard | Lignosulfonic acid, sodium salt |
| Soprophor 3D33 | 90093-37-1 | Solvay | 2,4,6-Tris(1-phenylethyl)phenol polyoxyethylenated-(16EO)-phosphate |
| Soprophor FLK | 99734-09-5 | Solvay | 2,4,6-Tris(1-phenylethyl)phenol polyoxyethylenated-(16EO)-phosphate potassium salt |
| Rhodacal 60 BE | 26264-06-2 | Solvay | Calcium dodecylbenzenesulfonate 60% in 2-ethylhexanol |
| Emulsogen EL 400 | 61791-12-6 | Clariant | Castor oil, ethoxylated |
| SAG 1572 | 63148-62-9 | Momentive | Dimethylsiloxane and silicone |
| Antarox B/848 | 9038-95-3 | Solvay | Alkyl propoxylate ethoxylate MW 2600, 48% EO |
| Propylene carbonate | 108-32-7 | various | 4-Methyl-1,3 -dioxolan-2-one |
| Dimethyl carbonate | 616-38-6 | various | CH3OC(=O)OCH3 |
| Dibutyl carbonate | 542-52-9 | various | BuOC(=O)OBu |
| Lucramul HOT 5902 | 64366-70-7 | Levaco | 2-Ethylhexanol propylene-ethylene glycol ether |
| Atlas G5002L | n/a | Croda | Oxirane, methyl-, polymer with oxirane, monobutyl ether |
| Aerosil 200 | 112945-52-5 | Evonik | Fumed amorphous silica/ Silicon dioxide, chemical obtained |
| Aerosil 380 | 112945-52-5 | Evonik | Fumed amorphous silica/ Silicon dioxide, chemical obtained |
| Aerosil R812S | 68909-20-6 | Evonik | Partially hydrophobized fumed amorphous silica |
| Aerosil R805 | 92797-60-9 | Evonik | Silane, trimethoxyoctyl-, hydrolysis product with silicon dioxide |
| Morwet D-425 | 68425-94-5 | Akzo Nobel | Condensed naphthalene formaldehyde sulfonate, sodium salt |
| Diammonium hydrogenphosphate (DAHP) | 7783-28-0 | various | (NH4)2HPO4 |
| Ammonium sulfate (AMS) | 7783-20-2 | various | (NH4)2SO4 |

**Example I**

All formulation constituents according to the experiments described in Tables Ia-c are combined in a 25 ml PE screwtop bottle, and 10 g of glass beads (size 1-1.25 mm) are added. The bottle is closed, clamped in an agitator apparatus (Retsch MM301) and treated at 30 Hz for 40 minutes; in the course of this, the samples heat up. After the time has elapsed, the samples are cooled down to room temperature and the consistency of the formulation is assessed. Subsequently, by means of a microscope (Zeiss transmitted light microscope, 40-fold magnification) the presence of agglomerates is evaluated, and the particle size is determined by laser dispersion. A very small particle size indicates good grindability, while the presence of agglomerates is a sign of poor dispersion characteristics.

**Table 1** (figures in % by weight)

| Example No. | 1-1 | 1-2 | 1-3 | 1-4 | 1-5 | 1-6 | 1-7 | 1-8 | 1-9 | 1-10 | 1-11 | 1-12 | 1-13 | 1-14 |
|---|---|---|---|---|---|---|---|---|---|---|---|---|---|---|
| I-2 | 2.00 | 2.00 | 2.00 | 2.00 | 2.00 | 2.00 | 2.00 | 2.00 | 2.00 | 2.00 | 2.00 | 2.00 | 2.00 | 2.00 |
| SAG 1572 | 0.10 | 0.10 | 0.10 | 0.10 | 0.10 | 0.10 | 0.10 | 0.10 | 0.10 | 0.10 | 0.10 | 0.10 | 0.10 | 0.10 |
| DAHP [% w/w] | 20.00 | 20.00 | 20.00 | 20.00 | 20.00 | 20.00 | 20.00 | 20.00 | 20.00 | 20.00 | 20.00 | | | |
| AMS [% w/w] | | | | | | | | | | | | 20.00 | 20.00 | 20.00 |
| Geropon T36 | 1.00 | 5.00 | | | | | | | | 1.00 | 1.00 | 1.00 | 1.00 | 1.00 |
| Morwet D-425 | | | 5.00 | | | | | | | 1.00 | 1.00 | 1.00 | 1.00 | 1.00 |
| Soprophor 3D33 | | | | 5.00 | | | | | | | | | | |
| Soprophor FLK | | | | | 5.00 | | | | | | | | | |
| Rhodacal 60 BE | | | | | | 5.00 | | | | | | | | |
| Borresperse NA | | | | | | | 5.00 | | | | | | | |
| Emulsogen EL 400 | | | | | | | | 5.00 | | | | | | |
| Antarox B/848 | 20.00 | 20.00 | 20.00 | 20.00 | 20.00 | 20.00 | 20.00 | 20.00 | 20.00 | | | 20.00 | | |
| Atlas G5002L | | | | | | | | | | 20.00 | | | 20.00 | |
| Lucramul HOT 5902 | | | | | | | | | | | 20.00 | | | 20.00 |
| Propylene carbonate | 56.90 | 52.90 | 52.90 | 52.90 | 52.90 | 52.90 | 52.90 | 52.90 | 57.90 | 55.90 | 55.90 | 55.90 | 55.90 | 55.90 |
| | | | | | | | | | | | | | | |
| Concentrate | fluid | fluid | fluid | fluid | fluid | fluid | fluid | fluid | fluid | fluid | fluid | fluid | fluid | fluid |
| Particle size [d90/50, μm] | 3/1 | 5/2 | 5/2 | 6/3 | 5/2 | 8/3 | 3/2 | 30/15 | 32/16 | 8/2 | 2/1 | 4/1 | 5/2 | 3/1 |
| Agglomerates [yes/no] | yes | no | no | partial | partial | no | no | no | yes | no | no | no | no | no |

Evaluation of the experiments:

The formulations based on I-2, ammonium salt and propylene carbonate with different amounts of surfactants (experiment 1-1, 1-2) show basic grindability of the respective ammonium salts and of I-2 under the experimental conditions specified, but significant agglomeration of the salt crystals in the concentrate is observed under the microscope, unless sufficient surfactant (>1%) is present in the formulation, meaning that the individual particles are dispersed very inadequately, if at all, in the liquid phase. Only certain surfactants are able to properly disperse the ammonium salt and I-2 (e.g. 1-3, 1-6, 1-7), and alkyl propoxylate ethoxylates are not able to do this on their own, as can be seen by the coarse size of the sample milled only with Antarox B/848 (1-9), as well as the presence of the agglomerates.

Most effective and surprising is the combination of two different surfactants in small amounts (experiments 1-10 to 1-14). This combination (Geropon T-36 and Morwet D-425) is particularly surprising because 1.00% of each surfactant is most effective in milling and stabilizing DAHP or AMS, than 5.00% of each of the surfactants alone.

**Example II**

For the purpose of testing suitable thickeners in the presence of suitable dispersing aids, all formulation constituents as specified in Table 2 are combined and homogenized with a colloidal mill. Subsequently, bead grinding is conducted (Dispermat SL50, 80% 2 mm beads, 4000 rpm, circulation grinding for 40 min) and the resultant formulation is analysed. Subsequently, a storage test is conducted at elevated temperature and then a qualitative/quantitative assessment of appearance, phase separation, rheological properties and dispersion stability after storage (e.g. viscosity) is performed

The assessment of appearance takes place analogously to DIN 10964 "Sensory analysis - Simple descriptive test". For this purpose, the samples to be examined are examined visually and, if required, by means of shaking and tilting, for shape, state of matter and colour and further peculiarities (especially, for example, lumps, caking, sediment formation, subsequent thickening, marbling of the sediment etc.).

Phase separation directly after storage is reported either as sediment content and calculated from the quotient H1 [level of the interface layer between sediment phase and supernatant] divided by H0 [total fill height of the sample], or as done here by the supernatant content:

$$\text{Sediment content} = (H1/H0) * 100\ [\%]$$

or

$$\text{Supernatant content} = 100 - \text{sediment content}\ [\%]$$

The assessment of viscosity is performed as per the CIPAC MT192; "Viscosity of Liquids by rotational viscometry" method.

Dispersion stability in 2% aqueous dilution is determined by analysing the amount of residue deposited after a certain amount of time according to the CIPAC MT 180 Method "Dispersion stability of suspo-emulsions".

**Table 2** (figures in %w/w)

| Example No. | 2-1* | 2-2* | 2-3* | 2-4* | 2-5* | 2-6* |
|---|---|---|---|---|---|---|
| I-2 | 2.00 | 2.00 | 2.00 | 2.00 | 2.00 | 2.00 |
| Geropon T36 | 1.00 | 1.00 | 1.00 | 1.00 | 1.00 | 1.00 |
| Morwet D-425 | 1.00 | 1.00 | 1.00 | 1.00 | 1.00 | 1.00 |
| Antarox B/848 | 20.00 | 20.00 | 20.00 | 20.00 | 20.00 | 20.00 |
| Aerosil 200 | 3.00 | | 3.00 | | | |
| Aerosil 380 | | 3.00 | | 3.00 | | |
| Aerosil R812S | | | | | 3.00 | |
| Aerosil R805 | | | | | | 3.00 |

(continued)

| Example No. | 2-1* | 2-2* | 2-3* | 2-4* | 2-5* | 2-6* |
|---|---|---|---|---|---|---|
| I-2 | 2.00 | 2.00 | 2.00 | 2.00 | 2.00 | 2.00 |
| Diammoniu m Hydrogen Phosphate | 20.00 | 20.00 | 20.00 | 20.00 | 20.00 | 20.00 |
| SAG 1572 | 0.10 | 0.10 | 0.10 | 0.10 | 0.10 | 0.10 |
| Dibutyl Carbonate | 52.90 | | | | | |
| Dimethyl Carbonate | | 52.90 | | | | |
| Propylene carbonate | | | 52.90 | 52.90 | 52.90 | 52.90 |
| Appearance of Concentrate | | | | | | |
| Appearance Concentrate | fluid | Milling not possible due to very high viscosity | separated phases | highly viscous | fluid | Milling not possible due to very high viscosity |
| Agglomerate s [yes/no] | no | n/a | no | no | no | n/a |
| Syneresis/Phase Separation | | | | | | |
| Supernatant after 4 w at 54 [%] | 98 | n/a | 36 | 96 | 97 | n/a |
| Characterizat ion of the sediment after storage at 54 for 4 w | Compact sediment. Formulation is solid, and becomes liquid upon shaking | n/a | Compact sediment | Compact sediment. Formulation is solid, and becomes liquid upon shaking | fluid | n/a |
| Rehomogeni zability after storage at 54°C for 4 w | bad | n/a | moderate | moderate | good | n/a |
| Example No. | 2-1* | 2-2* | 2-3* | 2-4* | 2-5* | 2-6* |
| Supernatant after 4 w at RT [%] | 77 | n/a | 80 | 98 | 96 | n/a |
| Characterizat ion of the sediment after storage at RT for 4 w | fluid | n/a | n/a | Compact sediment. Formulation is solid, and becomes liquid upon shaking | fluid | n/a |
| Rehomogeni zability after storage at RT for 4 w | bad | n/a | bad | moderate | good | n/a |

(continued)

| | | | | | | |
|---|---|---|---|---|---|---|
| Viscosity | | | | | | |
| Dynamic viscosity @ 8.9 1/s fresh sample [mPa.s] | 35 | n/a | 49 | 76 | 101 | n/a |
| Dynamic viscosity @ 109 1/s fresh sample [mPa.s] | 28 | n/a | 43 | 72 | 67 | n/a |
| Dynamic viscosity @ 8.9 1/s after 4W @ 54°C [mPa.s] | 1637 | n/a | 66 | 576 | 145 | n/a |
| Dynamic viscosity @ 109 1/s after 4 W @ 54°C [mPa.s] | 224 | n/a | 54 | 142 | 86 | n/a |
| Dynamic viscosity @ 8.9 1/s after 4W @ RT [mPa.s] | 409 | n/a | 52 | 614 | 436 | n/a |
| Dynamic viscosity @ 109 1/s after 4W @ RT [mPa.s] | 85 | n/a | 46 | 143 | 119 | n/a |
| Dispersion Stability (2% formulation, CIPAC C Water, RT) | | | | | | |
| Dispersion stability after 1h fresh sample [mL] | 12 | n/a | 12 | 10 | 0.2 | n/a |
| Dispersion stability after 1h after 4W | 10 | n/a | 15 | 15 | 5 | n/a |
| Example No. | 2-1* | 2-2* | 2-3* | 2-4* | 2-5* | 2-6* |
| @ 54°C [mL] | | | | | | |
| Dispersion stability after 1h after 4W @ RT [mL] | 10 | n/a | 15 | 0 | 0.1 | n/a |
| * inventive example | | | | | | |

Evaluation of the experiments:

Without use of additional dispersing aids, using particular insoluble fillers such as Aerosil 200, Aerosil 380 or Aerosil R812S it is possible to produce stable formulations having different viscosities (Recipes 2-1, 2-3, 2-4, 2-5). Particularly important it is to choose the right combination of filler and solvent, in order to avoid a situation where the formulation becomes extremely viscous and not processable (Recipes 2-2, 2-6).

After storage for four weeks at room temperature, all processable formulations (Recipes 2-1, 2-3, 2-4, 2-5) have only small phase separation and in some cases moderate to good redispersibility. After storage for four weeks at 54°C almost all processable formulations (Recipes 2-1, 2-3, 2-4, 2-5) have small phase separation and in most cases

moderate to good redispersibility.

A further factor for ascertaining formulation stability is the dispersion stability of the formulation in aqueous dilution. It is found that all processable formulations (Recipes 2-1, 2-3, 2-4, 2-5) are dispersable in water, and after storage at room temperature or at 54°C in some cases the phase separation is relatively small (<=5 mL).

## Claims

1. Composition comprising:

    a) at least one active ingredient solid at room temperature,
    b) at least one ammonium salt,
    c) at least one dispersant from the class of the alkyl propoxylate ethoxylates,
    d) optionally one or more surfactants,
    e) at least one water-insoluble filler,
    f) at least one solvent from the group of the carbonate esters, and
    g) optionally further adjuvants,

    where active ingredient a) is insoluble or only slightly soluble in the chosen solvent f).

2. Composition according to Claim 1, **characterized in that** component d) is obligatory.

3. Composition according to Claim 1 or 2, **characterized in that** a) is selected from the group of the active insecticidal ingredients having a solubility in the chosen solvent f) of not more than 5 g/l, further preferably not more than 4 g/l, even further preferably not more than 2.5 g/l, and especially preferably not more than 1 g/l.

4. Composition according to one or more of the preceding claims, **characterized in that** a) is selected from the group comprising diamide insecticides, spinosyns (IRAC Group 5), mectins (IRAC Group 6), ethiprole, triflumuron, deltamethrin and tetronic acid or tetramic acid derivatives (IRAC Group 23, including the compounds of the formulae I and II specified below.

5. Composition according to one or more of the preceding claims, **characterized in that** a) is selected from the group of the tetronic acid or tetramic acid derivatives (IRAC Group 23), including the compounds of the formulae I and II specified below.

6. Composition according to one or more of the preceding claims, **characterized in that** a) is a tetramic acid derivative of the formula (I)

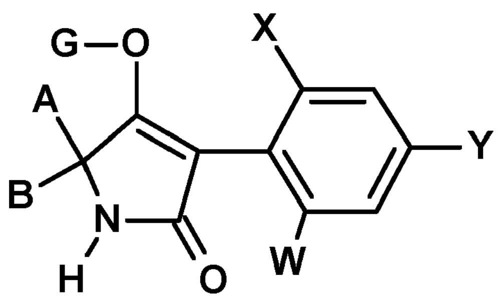

(I)

in which

W and Y are independently hydrogen, C 1-C4-alkyl, chlorine, bromine, iodine or fluorine,
X is C1-C4-alkyl, C1-C4-alkoxy, chlorine, bromine or iodine,
A, B and the carbon atom to which they are bonded are C3-C6-cycloalkyl substituted by an optionally C1-C4-alkyl- or $C_1$-$C_4$-alkoxy-$C_1$-$C_2$-alkyl-substituted alkylenedioxy group that forms a 5-membered or 6-membered ketal together with the carbon atom to which it is bonded,
G is hydrogen (a) or is one of the groups

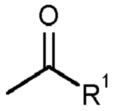 (b), 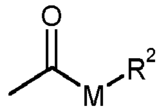 (c), E (d)

in which

E is a metal ion or an ammonium ion,
M is oxygen or sulfur,
R1 is straight-chain or branched C1-C6-alkyl,
R2 is straight-chain or branched C1-C6-alkyl.

7. Composition according to one or more of the preceding claims, **characterized in that** component a) is a compound of the formula (I-2)

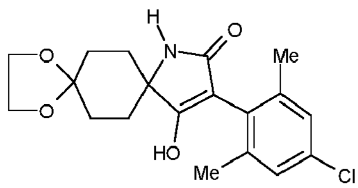 (I-2).

8. Composition according to one or more of the preceding claims, **characterized in that** b) is selected from the group comprising ammonium carbonate, ammonium hydrogensulfate, ammonium sulfate (AMS), ammonium hydrogencarbonate, ammonium carbonate and diammonium hydrogen-phosphate (DAHP).

9. Composition according to one or more of the preceding claims, **characterized in that** c) is selected from the group comprising alkyl polypropylene glycol-polyethylene glycol compound of the general formula (III-a)

R—O—A—B—H

**(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

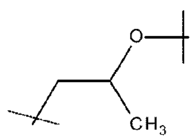

**Formula III-b**

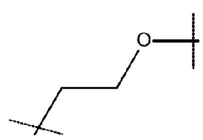

**Formula III-c**

and alkyl polypropylene glycol-polyethylene glycol compounds of the general formula (IIId)

$$R\text{-}O\text{-}(C_mH_{2m}O)_x\text{-}(C_nH_{2n}O)_y\text{-}R' \qquad \text{(IIId)}$$

in which

R and R' are independently hydrogen, a linear $C_1$- to Cs-alkyl radical or a branched $C_3$- or $C_4$-alkyl radical;

m is 2 or 3;
n is 2 or 3;
x is 5 to 150; and

y is 5 to 150,
where one radical n or m has the meaning of 2 and the other radical n or m has the meaning of 3.

**10.** Composition according to one or more of the preceding claims, **characterized in that** d) is a surfactant selected from the group comprising polycarboxylate types, salts of sulfated formaldehyde condensation products with alkylaromatics, salts of sulfated formaldehyde condensation products with ditolyl ether, salts of sulfated formaldehyde condensation products with cyclohexanone, and lignosulfonates and salts thereof.

**11.** Composition according to one or more of the preceding claims, **characterized in that** e) is selected from the group comprising modified natural silicates, silicate minerals, synthetic silicates and fumed silicas, attapulgites and fillers based on synthetic polymers.

**12.** Composition according to one or more of the preceding claims, **characterized in that** e) is selected from the group comprising dimethyl carbonate, diethyl carbonate, dipropyl carbonate, diisopropyl carbonate, dibutyl carbonate and isomers thereof, diphenyl carbonate, ethylene carbonate, trimethylene carbonate, propylene carbonate, butylene carbonate, pentylene carbonate, hexylene carbonate and octylene carbonate.

**13.** Composition according to one or more of the preceding claims, **characterized in that** the components are present as follows:

a) 1-30% by weight
b) 1-40% by weight
c) 1-40% by weight
d) 0-10% by weight
e) 0.1-15% by weight
g) 0-10% by weight
f) to one litre.

**14.** Composition according to one or more of the preceding claims, **characterized in that** the components are present as follows:

a) 2-15% by weight
b) 15-30% by weight
c) 10-30% by weight
d) 0.5-2.5% by weight
e) 1-10% by weight
g) 0.05-6% by weight
f) to one litre.

**15.** Composition according to one or more of the preceding claims, comprising

a) compound having the formula (I-2) having the following structure:

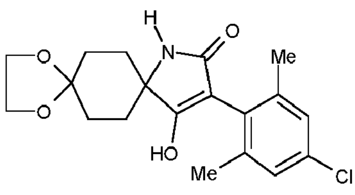
(I-2)

b) at least one ammonium salt selected from the group comprising ammonium sulfate (AMS) and diammonium hydrogenphosphate (DAHP),
c) at least one dispersant selected from the group comprising alkyl polypropylene glycol-polyethylene glycol

compound of the general formula (III-a)

R-O-A-B-H **(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

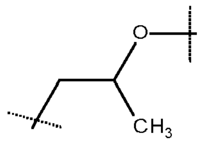

**Formula III-b**

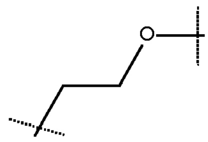

**Formula III-c**

and alkyl polypropylene glycol-polyethylene glycol compounds of the general formula (IIId)

$$R\text{-}O\text{-}(C_mH_{2m}O)_x\text{-}\ (C_nH_{2n}O)_y\text{-}R' \qquad \text{(IIId)}$$

in which the individual radicals and indices have the following definitions:

R and R' are independently hydrogen, a linear $C_1$- to Cs-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3,

d) at least one surfactant selected from the group comprising polycarboxylate types,
e) at least one filler selected from the group comprising fumed silicas and attapulgites,
f) at least one solvent selected from the group comprising propylene carbonate,
g) optionally further adjuvants.

**16.** Use of a composition according to one or more of Claims 1 to 15 for controlling insects.

FIGURE 1:

**Fig. 1: X-ray diffraction pattern of I-2 (Mod. A)**

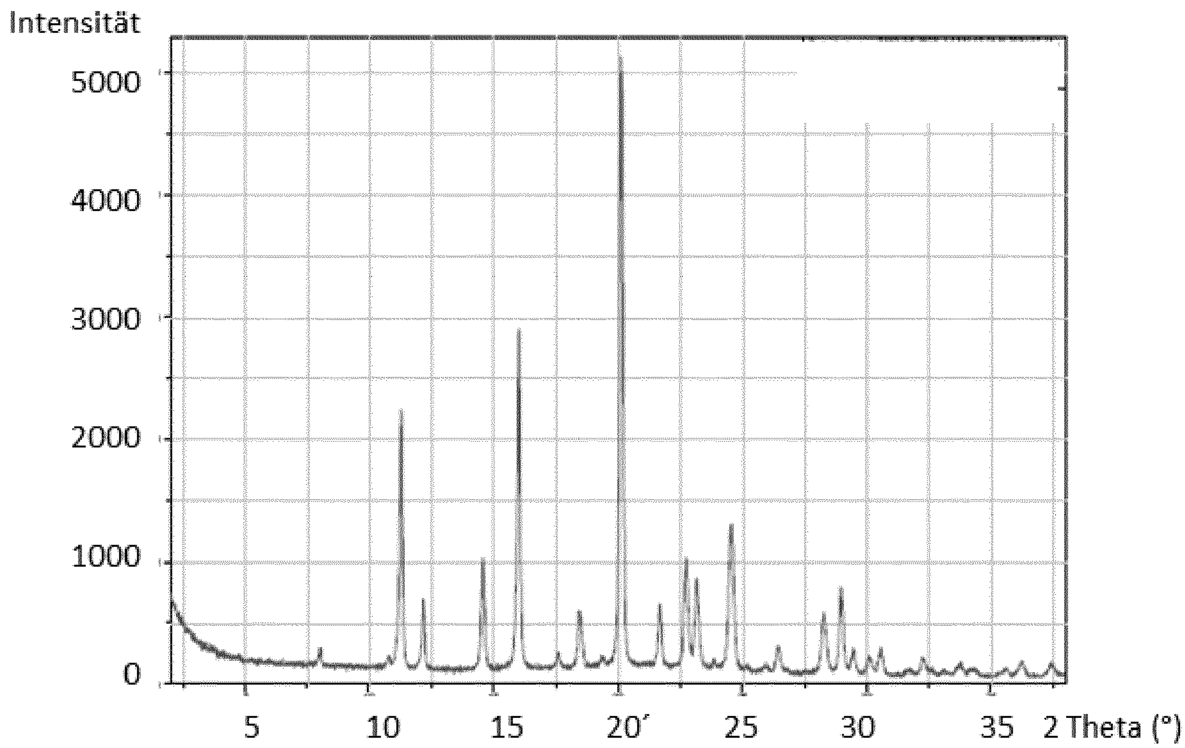

FIGURE 2 :

FIG. 2: IR-Spectrum

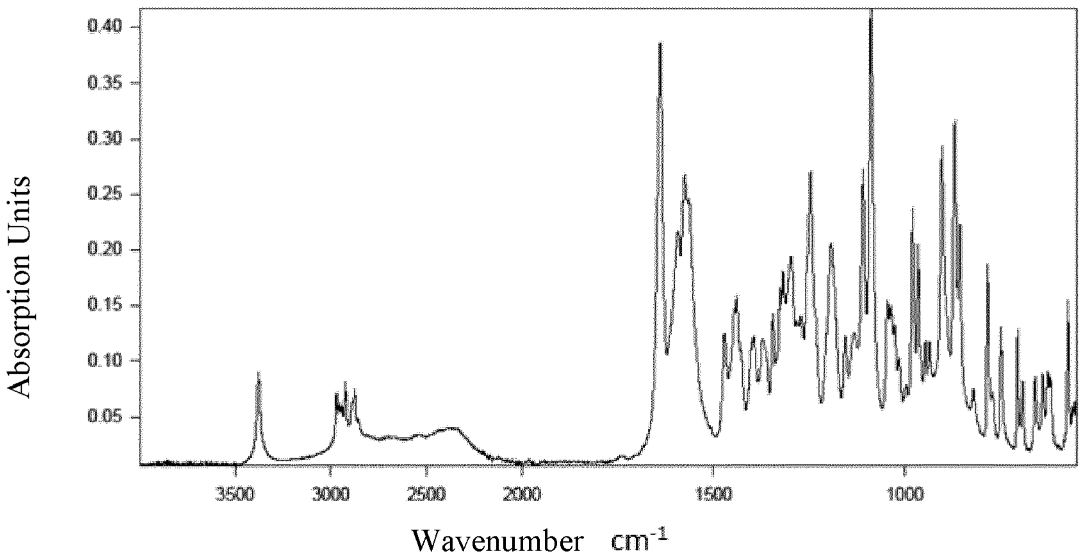

Europäisches Patentamt
European Patent Office
Office européen des brevets

# EUROPEAN SEARCH REPORT

Application Number
EP 23 15 9275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/029552 A2 (BAYER CROPSCIENCE AG [DE]; STORK ANDREAS [DE] ET AL.) 17 March 2011 (2011-03-17)<br>* abstract *<br>* page 1, line 1 - line 24 *<br>* page 3, line 15 - page 5, line 21 *<br>* page 8, line 8 - line 13 *<br>* page 10, line 26 - page 11, line 18 *<br>* page 12, line 1 - line 25 *<br>* page 13, line 1 - line 9 *<br>* tables I,II *<br>----- | 1-16 | INV.<br>A01N25/02<br>A01N25/30<br>A01N33/12<br>A01N43/36 |
| X,P | WO 2019/197635 A1 (BAYER AG [DE]) 17 October 2019 (2019-10-17)<br>* page 1, line 19 - line 25 *<br>* page 3, line 13 - page 4, line 2 *<br>* page 4, line 22 - page 5, line 8 *<br>* page 6, line 17 - page 9, line 5 *<br>* page 17, line 16 - page 19, line 22 *<br>* tables IIIa,IIIb *<br>----- | 1-16 | |
| | | | TECHNICAL FIELDS SEARCHED (IPC) |
| A | WO 2017/032644 A1 (BAYER CROPSCIENCE AG [DE]) 2 March 2017 (2017-03-02)<br>* page 2, line 21 - page 4, line 3 *<br>* page 5, line 11 - page 6, line 24 *<br>* table 1 *<br>* page 19, line 5 - line 15 *<br>* tables 4,5 *<br>* page 24, line 1 - line 11 *<br>* page 25, line 18 - line 24 *<br>* examples 9,10,11,12,13,18-20 *<br>----- | 1-16 | A01N |
| | -/-- | | |

The present search report has been drawn up for all claims

2

| Place of search | Date of completion of the search | Examiner |
|---|---|---|
| Munich | 20 June 2023 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 15 9275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2008/151725 A1 (BAYER CROPSCIENCE AG [DE]; VERMEER RONALD [DE] ET AL.) 18 December 2008 (2008-12-18)<br>* page 1, line 27 - line 33 *<br>* page 3, line 14 - line 32 *<br>* page 4, line 12 - line 15 *<br>* page 9, line 18 - line 26 *<br>* page 15, line 16 - page 16, line 4 *<br>* table 7 *<br>----- | 1-16 | |
| Y | WO 2016/142518 A1 (RHODIA OPERATIONS [FR]) 15 September 2016 (2016-09-15)<br>* page 2, line 6 - line 18 *<br>* page 4, line 11 - line 36 *<br>* page 5, line 22 - line 27 *<br>* page 9, line 3 - line 20 *<br>* tables 1, 2 *<br>* claims 2,4 *<br>----- | 1-16 | |
| Y | WO 2009/004281 A2 (SYNGENTA LTD [GB]; WILLIAMS KIRSTY JANE [GB] ET AL.) 8 January 2009 (2009-01-08)<br>* page 1, line 1 - line 6 *<br>* page 2, line 10 - line 14 *<br>* page 4, line 6 - line 13 *<br>* page 6, line 5 - page 7, line 8 *<br>* tables 1,3,4 *<br>* claim 24 *<br>----- | 1-16 | TECHNICAL FIELDS SEARCHED (IPC) |

The present search report has been drawn up for all claims

2

| Place of search | Date of completion of the search | Examiner |
|---|---|---|
| Munich | 20 June 2023 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 15 9275

This annex lists the patent family members relating to the patent documents cited in the above-mentioned European search report. The members are as contained in the European Patent Office EDP file on
The European Patent Office is in no way liable for these particulars which are merely given for the purpose of information.

20-06-2023

| Patent document cited in search report | Publication date | Patent family member(s) | Publication date |
|---|---|---|---|
| WO 2011029552 A2 | 17-03-2011 | AP 3070 A | 31-12-2014 |
| | | AR 078113 A1 | 12-10-2011 |
| | | AU 2010294603 A1 | 29-03-2012 |
| | | BR 112012005597 A2 | 08-09-2015 |
| | | CL 2012000644 A1 | 05-10-2012 |
| | | CN 102573461 A | 11-07-2012 |
| | | CO 6511233 A2 | 31-08-2012 |
| | | DK 2477488 T3 | 31-08-2015 |
| | | EP 2305030 A1 | 06-04-2011 |
| | | EP 2477488 A2 | 25-07-2012 |
| | | ES 2544730 T3 | 03-09-2015 |
| | | HR P20150902 T1 | 25-09-2015 |
| | | JP 5583220 B2 | 03-09-2014 |
| | | JP 2013504527 A | 07-02-2013 |
| | | KR 20130026406 A | 13-03-2013 |
| | | PL 2477488 T3 | 30-11-2015 |
| | | PT 2477488 E | 16-09-2015 |
| | | SI 2477488 T1 | 30-10-2015 |
| | | TW 201112951 A | 16-04-2011 |
| | | US 2011086848 A1 | 14-04-2011 |
| | | US 2018035666 A1 | 08-02-2018 |
| | | WO 2011029552 A2 | 17-03-2011 |
| | | ZA 201202430 B | 25-09-2013 |
| WO 2019197635 A1 | 17-10-2019 | AR 114781 A1 | 14-10-2020 |
| | | AU 2019250617 A1 | 29-10-2020 |
| | | CN 111970927 A | 20-11-2020 |
| | | EP 3772943 A1 | 17-02-2021 |
| | | IL 277944 A | 30-11-2020 |
| | | JP 2021521213 A | 26-08-2021 |
| | | KR 20200143393 A | 23-12-2020 |
| | | MA 52209 A | 17-02-2021 |
| | | TW 202002781 A | 16-01-2020 |
| | | WO 2019197635 A1 | 17-10-2019 |
| WO 2017032644 A1 | 02-03-2017 | AR 105783 A1 | 08-11-2017 |
| | | BR 112018003344 A2 | 02-10-2018 |
| | | CA 2995900 A1 | 02-03-2017 |
| | | CL 2018000435 A1 | 25-01-2019 |
| | | CN 108135162 A | 08-06-2018 |
| | | CO 2018001756 A2 | 19-07-2018 |
| | | EA 201890491 A1 | 31-08-2018 |
| | | EP 3337318 A1 | 27-06-2018 |
| | | IL 257416 A | 30-04-2018 |
| | | JP 6946267 B2 | 06-10-2021 |
| | | JP 2018523701 A | 23-08-2018 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 23 15 9275

This annex lists the patent family members relating to the patent documents cited in the above-mentioned European search report. The members are as contained in the European Patent Office EDP file on
The European Patent Office is in no way liable for these particulars which are merely given for the purpose of information.

20-06-2023

| Patent document cited in search report | Publication date | Patent family member(s) | Publication date |
|---|---|---|---|
| | | KR 20180042334 A | 25-04-2018 |
| | | UA 125871 C2 | 29-06-2022 |
| | | US 2018235208 A1 | 23-08-2018 |
| | | UY 36869 A | 31-03-2017 |
| | | WO 2017032644 A1 | 02-03-2017 |
| WO 2008151725 A1 | 18-12-2008 | AR 066934 A1 | 23-09-2009 |
| | | AU 2008261348 A1 | 18-12-2008 |
| | | BR PI0813810 A2 | 06-01-2015 |
| | | CA 2694028 A1 | 18-12-2008 |
| | | CL 2008001606 A1 | 19-12-2008 |
| | | CN 101677528 A | 24-03-2010 |
| | | CO 6241135 A2 | 20-01-2011 |
| | | EP 2002719 A1 | 17-12-2008 |
| | | EP 2157852 A2 | 03-03-2010 |
| | | JP 2010530365 A | 09-09-2010 |
| | | KR 20100046110 A | 06-05-2010 |
| | | TW 200906296 A | 16-02-2009 |
| | | US 2010179228 A1 | 15-07-2010 |
| | | WO 2008151725 A1 | 18-12-2008 |
| | | ZA 200908127 B | 29-06-2011 |
| WO 2016142518 A1 | 15-09-2016 | AU 2016231047 A1 | 31-08-2017 |
| | | BR 112017017439 A2 | 03-04-2018 |
| | | CA 2976718 A1 | 15-09-2016 |
| | | EP 3267791 A1 | 17-01-2018 |
| | | US 2018027803 A1 | 01-02-2018 |
| | | WO 2016142518 A1 | 15-09-2016 |
| WO 2009004281 A2 | 08-01-2009 | AR 067380 A1 | 07-10-2009 |
| | | AU 2008270070 A1 | 08-01-2009 |
| | | BR PI0814188 A2 | 14-10-2014 |
| | | CA 2691183 A1 | 08-01-2009 |
| | | CN 101808512 A | 18-08-2010 |
| | | EP 2175720 A2 | 21-04-2010 |
| | | JP 5453252 B2 | 26-03-2014 |
| | | JP 2010531864 A | 30-09-2010 |
| | | KR 20100037063 A | 08-04-2010 |
| | | SG 195618 A1 | 30-12-2013 |
| | | TW 200906297 A | 16-02-2009 |
| | | US 2010331187 A1 | 30-12-2010 |
| | | WO 2009004281 A2 | 08-01-2009 |
| | | ZA 200908969 B | 25-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006089661 A
- US 20080255204 A1, Davies
- WO 2011029552 A
- WO 2003000053 A
- WO 2011131623 A
- US 20110281727 A1, Fischer
- WO 2007068428 A
- WO 2008151725 A
- EP 2193712 A1
- WO 2009115262 A
- WO 06089633 A
- WO 08067911 A
- WO 2008036865 A2